# EUROPÄISCHE PATENTSCHRIFT

(11) **EP 2 405 063 B1**
(45) Veröffentlichungstag und Bekanntmachung des Hinweises auf die Patenterteilung: **07.08.2013**
(21) Anmeldenummer: 11171820.1
(22) Anmeldetag: 29.06.2011
(51) Int. Cl.: E03F 5/14, B01D 21/00

(54) **Abwasserbehandlungsanordnung**
Waste water treatment assembly
Agencement de traitement d'eaux usées

(30) Priorität: 06.07.2010 DE 102010030976
(43) Veröffentlichungstag der Anmeldung: 11.01.2012
(73) Patentinhaber: FRÄNKISCHE ROHRWERKE Gebr. Kirchner GmbH & Co. KG, 97486 Königsberg (DE)
(72) Erfinder: Adams, Dietmar, 01328 Dresden (DE); Kriese, Jens, 14621 Schönwalde-Glien (DE); Wilhelm, Jörg, 72070 Tübingen (DE); Czesch, Christian, 93055 Regensburg (DE); Haase, Reinhard, 32689 Kalletal-Hohenhausen (DE); Schütz, Michael, 97475 Zeil/Main (DE)
(74) Vertreter: Herzog, Markus

(56) Entgegenhaltungen:
- EP-A1- 2 085 527
- EP-A1- 2 226 106
- DE-A1-102004 008 960
- US-A- 4 130 489
- US-A- 5 364 535

## Beschreibung

Die Erfindung betrifft eine Abwasserbehandlungsanordnung zum zumindest teilweisen Entfernen von Fremdstoffen, die eine gegenüber Wasser abweichende spezifische Dichte aufweisen, aus Abwasser, insbesondere aus Regenwasser, umfassend wenigstens ein Abwasserbehandlungsrohr, welches wenigstens einen Strömungsraum mit wenigstens einer Einlassöffnung und wenigstens einer Auslassöffnung aufweist, wobei das Abwasser durch die wenigstens eine Einlassöffnung in den wenigstens einen Strömungsraum eintritt und nach Durchströmen des wenigstens einen Strömungsraums durch die wenigstens eine Auslassöffnung aus dem wenigstens einen Strömungsraum austritt; und wenigstens einen strömungsberuhigten Sammelraum aufweist, welcher über wenigstens eine am Boden oder/und an der Decke des wenigstens einen Strömungsraums vorgesehene Durchtrittsöffnung mit dem wenigstens einen Strömungsraum verbunden ist, und in welchem sich die in dem wenigstens einem Strömungsraum auf Grund ihrer gegenüber Wasser abweichenden spezifischen Dichte zu Boden sinkenden oder/und zur Decke steigenden und durch die wenigstens eine Durchtrittsöffnung hindurchtretenden Fremdstoffe ansammeln.

Die aus dem Abwasser durch die Abwasserbehandlungsanordnung zumindest teilweise zu entfernenden Fremdstoffe können dabei Schmutzfrachten mit einer höheren spezifischen Dichte als Wasser, beispielsweise Sand, diverser Feststoffabrieb infolge von Straßenverkehr oder dergleichen sedimentierbare Stoffe sein oder/und Leichtstoffe mit einer geringeren spezifischen Dichte als Wasser, beispielsweise Leichtflüssigkeiten, wie Öl, Benzin oder dergleichen. Unter dem Begriff "Leichtstoffe" sollen in der folgenden Anmeldung aber nicht nur Flüssigkeiten, sondern sämtliche im Abwasser mitgeführten Stoffe verstanden werden, die eine gegenüber Wasser geringere Dichte aufweisen.

Der wenigstens eine strömungsberuhigte Sammelraum des Abwasserbehandlungsrohrs, welcher über die wenigstens eine am Boden des wenigstens einen Strömungsraums vorgesehene Durchtrittsöffnung mit dem wenigstens einen Strömungsraum verbunden ist, dient der Aufnahme von Fremdstoffen, die eine höhere spezifische Dichte als Wasser aufweisen. Diese Fremdstoffe sinken schwerkraftbedingt in der im Betriebszustand wassergefüllten Abwasserbehandlungsanordnung nach unten, wo sie sich als Sedimente in diesem wenigstens einen Sammelraum ablagern können. Daher wird dieser wenigstens eine Sammelraum im Folgenden auch "Sediment-Sammetraum" genannt.

Analog hierzu dient der wenigstens eine strömungsberuhigte Sammelraum des Abwasserbehandlungsrohrs, welcher über die wenigstens eine an der Decke des wenigstens einen Strömungsraums vorgesehene Durchtrittsöffnung mit dem wenigstens einen Strömungsraum verbunden ist, der Aufnahme von Fremdstoffen, die eine geringere spezifische Dichte als Wasser aufweisen, d.h. von Leichtstoffen. Diese Leichtstoffe steigen in der im Betriebszustand wassergefüllten Abwasserbehandlungsanordnung entgegen der Schwerkraft nach oben auf, wo sie sich in diesem wenigstens einen Sammelraum ansammeln können. Daher wird dieser wenigstens eine Sammelraum im Folgenden auch "Leichtstoff-Sammelraum" genannt.

Eine eingangs genannte Abwasserbehandlungsanordnung zur Behandlung von Abwasser, welches Schmutzfrachten mit einer höheren Dichte als Wasser mit sich führt, ist in Form eines Sedimentationsrohrs bereits aus der DE 10 2004 008 960 A1 der Anmelderin bekannt. Ein derartiges Sedimentationsrohr wird auch in der EP 2 085 527 A1 der Anmelderin eingesetzt. Ferner ist aus der EP 2 226 106 A1 der Anmelderin eine Leichtstoffabscheidevorrichtung bekannt, welche insbesondere dazu ausgebildet ist, Leichtflüssigkeiten aus Abwasser, insbesondere Regenwasser, zu entfernen, und welche ebenfalls die obigen Merkmale einer Abwasserbehandlungsanordnung aufweist.

In beiden Fällen, d.h. sowohl im Fall des Sedimentationsrohrs als auch im Fall der Leichtstoffabscheidevorrichtung, ist es für ein effizientes Entfernen von Fremdstoffen aus dem Abwasser von großer Bedeutung, dass den Fremdstoffen in der Abwasserbehandlungsanordnung ausreichend Zeit zur Verfügung steht, um je nach ihrer spezifischen Dichte entweder zum Boden des Strömungsraums sinken oder zu dessen Decke aufsteigen zu können. Je feiner die Partikel- oder Tröpfchengröße der Fremdstoffe ist und je geringer der Unterschied zwischen ihrer spezifischen Dichte zu jener des sie umgebenden Wassers ist, desto langsamer sinken oder steigen die Fremdstoffe im Strömungsraum und desto mehr Zeit benötigen sie entsprechend, um in einen Sammelraum zu gelangen. Ferner ist es für ein effizientes Entfernen von Fremdstoffen aus dem Abwasser wichtig, dass die Strömung im Strömungsraum laminar ausgebildet ist, da Turbulenzen ein Absinken oder Aufsteigen der Fremdstoffe zumindest behindern können.

Mit den aus dem Stand der Technik bekannten Abwasserbehandlungsanordnungen kann das Abwasser nur begrenzt gereinigt werden.

Demgegenüber ist es Aufgabe der Erfindung, eine Abwasserbehandlungsanordnung bereitzustellen, bei welcher die Reinigungswirkung gegenüber einer aus dem Stand der Technik bekannten Abwasserbehandlungsanordnung erhöht ist. Zudem sollen die mit der Fertigung und Installation der erfindungsgemäßen Abwasserbehandlungsanordnung verbundenen Kosten möglichst gering gehalten werden.

Diese Aufgabe wird durch eine Abwasserbehandlungsanordnung der eingangs genannten Art gelöst, bei welcher die Abwasserbehandlungsanordnung wenigstens zwei derartige Abwasserbehandlungsrohre umfasst, welche strömungstechnisch mittels wenigstens eines von ihnen gesondert ausgebildeten Verbindungselements miteinander verbunden sind, und zwar derart, dass Abwasser, welches durch die wenigstens eine Auslassöffnung aus dem wenigstens einen Strömungsraum eines der Abwasserbehandlungsrohre in das Verbindungselement austritt, aus diesem Verbindungselement durch die wenigstens eine Einlassöffnung in den wenigstens einen Strömungsraum des ihm stromabwärts benachbarten Abwasserbehandlungsrohres der wenigstens zwei Abwasserbehandlungsrohre eintritt.

Indem die erfindungsgemäße Abwasserbehandlungsanordnung mehr als ein aus dem Stand der Technik bekanntes Abwasserbehandlungsrohr umfasst, kann die Gesamtlänge des von dem Abwasser durchströmten Strömungsraums merklich vergrößert werden. Infolgedessen benötigt das Abwasser bei gleicher Strömungsgeschwindigkeit eine entsprechend längere Zeit, um die Abwasserbehandlungsanordnung zu durchströmen. Somit bleibt auch den aus dem Abwasser zu entfernenden Fremdstoffen mehr Zeit, um je nach ihrer gegenüber dem restlichen Abwasser spezifischen Dichte entweder nach unten, zum Boden des Strömungsraums abzusinken, oder nach oben, zur Decke des Strömungsraums aufzusteigen, wodurch die Reinigungswirkung der erfindungsgemäßen Abwasserbehandlungsanordnung gegenüber einer aus dem Stand der Technik bekannten Abwasserbehandlungsanordnung erhöht wird.

Zur Erzielung einer vergleichbar hohen Reinigungswirkung könnte natürlich auch nur ein einziges, aus dem Stand der Technik bekanntes Abwasserbehandlungsrohr verwendet werden, welches eine entsprechend große Länge aufweist. Jedoch ist dies zumeist unpraktikabel, da für die Verlegung, des Abwasserbehandlungsanordnungsrohrs ein gleich langer Graben ausgehoben werden muss, was zu Zwangspunkten bei der Planung der entwässerungstechnischen Anlagen führen kann.

Durch die erfindungsgemäße Abwasserbehandlungsanordnung ist es jedoch möglich, dass die für ein effizientes Entfernen von Fremdstoffen aus Abwasser benötigte Gesamtlänge des Strömungsraums in der Abwasserbehandlungsanordnung je nach Gestalt des Verbindungselements, durch eine Mehrzahl von relativ kurzen Abwasserbehandlungsrohren sehr flexibel gestaltet werden kann, wodurch wiederum die Abwasserbehandlungsanordnung selbst sehr kompakt ausgelegt und der Aufwand zum Verlegen der Anordnung im Untergrund entsprechend reduziert werden kann. Insbesondere ist es möglich, den Verlauf der einzelnen, relativ kurzen Abwasserbehandlungsrohre an die örtlichen Gegebenheiten anzupassen, um die Anordnung in nur relativ gut zugänglichen und einfach aufzugrabenden Abschnitten zu verlegen und damit Kosten zu sparen. Die Verbindungselemente können dabei eine beliebige Gestalt aufweisen, und beispielsweise einfach nur ein Schacht sein.

Der Gedanke, mehrere relativ kurze Abwasserbehandlungsrohre mit Verbindungselementen miteinander zu verbinden, wobei die Verbindungselemente zu einer Umlenkung der Abwasserströmung in der Abwasserbehandlungsanordnung führen, ist für einen Fachmann zunächst wenig naheliegend, da ihm bekannt ist, dass jede Richtungsänderung der Abwasserströmung die Ausbildung einer laminaren Strömung negativ beeinflusst. Wie eingangs erwähnt, ist aber die Ausbildung einer möglichst laminaren, d. h. turbulenzarmen, Strömung für die Verwirklichung eines effizienten Abscheideprozesses von Fremdstoffen besonders wichtig.

Es ist das Verdienst der Erfinder, herausgefunden zu haben, dass die durch die erfindungsgemäße Abwasserbehandlungsanordnung erzielbaren Vorteile den Nachteil überwiegen, dass an den Stellen der Verbindungselemente Turbulenzen in die Abwasserströmung eingebracht werden.

Es sei hier angemerkt, dass mit "benachbart" in dieser Anmeldung gemeint ist, dass die entsprechenden Abwasserbehandlungsrohre in einem engen räumlichen Bezug zueinander stehen, d.h. dass sie maximal um eine Distanz in der Größenordnung von einem Meter voneinander beabstandet sind. Insbesondere soll unter "Verbindungselement" daher hier kein Kanalsystem verstanden werden, welches zwei Abwasserbehandlungsrohre über eine große Distanz hinweg miteinander verbindet.

Da sich in dem wenigstens einen strömungsberuhigten Sammelraum eines Abwasserbehandlungsrohres mit der Zeit Fremdstoffe ansammeln, muss dieser in regelmäßigen Zeitintervallen entleert werden können. Wie aus dem Stand der Technik bereits bekannt, ist dabei das Abwasserbehandlungsrohr vorzugsweise derart ausgebildet und wird so im Untergrund verlegt, dass ein am tiefsten gelegener Ort des wenigstens einen Sammelraums, sofern dieser wenigstens eine Sammelraum ein Sediment-Sammelraum ist, in der Nähe eines unteren Rohr-Längsendes angeordnet ist, oder/und dass ein am höchsten gelegener Ort des wenigstens einen Sammelraums, sofern dieser wenigstens eine Sammelraum ein Leichtstoff-Sammelraum ist, in der Nähe eines oberen Rohr-Längsendes angeordnet ist. Auf diese Weise können innerhalb des wenigstens einen Sammelraums die gesamten Sedimentstoffe an den am tiefsten gelegenen Ort in der Nähe des unteren Rohrendes herab sinken, um sich dort zu sammeln und von dort entleert zu werden, oder/und können die gesamten Leichtstoffe an den am höchsten gelegenen Ort in der Nähe des oberen Rohrendes aufsteigen, um sich dort zu sammeln und von dort entleert zu werden.

Um die Entleerung des wenigstens einen Sammelraums und bei Bedarf auch Reinigungs- oder/und weitere Wartungsarbeiten einfach durchführen zu können, kann in Weiterbildung der Erfindung wenigstens ein Verbindungselement der Abwasserbehandlungsanordnung in einem, beispielsweise zu Wartungszwecken, zugänglichen und vertikal verlaufenden Schacht angeordnet oder von diesem selbst gebildet sein.

Um insbesondere für Wartungsarbeiten eine gute Zugänglichkeit an allen Rohrenden der wenigstens zwei Abwasserbehandlungsrohre gewährleisten zu können und dabei gleichzeitig möglichst wenig Schächte anlegen zu müssen, wird vorgeschlagen, dass alle Verbindungselemente der Abwasserbehandlungsanordnung in zwei, beispielsweise zu Wartungszwecken, zugänglichen und vertikal verlaufenden Schächten angeordnet oder von diesen selbst gebildet sind. Dabei können die Abwasserbehandlungsrohre, welche sich vorzugsweise geradlinig erstrecken, beispielsweise alle übereinander, in einer sich vertikal erstreckenden Ebene angeordnet sein.

Weiterbildend wird vorgeschlagen, dass die Abwasserbehandlungsanordnung eine gerade Anzahl an Abwasserbehandlungsrohren umfasst. Hierdurch ergibt sich nämlich vorteilhaft, dass der Abwasserbehandlungsanordnung Abwasser über den gleichen Schacht zu- und aus dieser abgeführt werden kann. Dies ist insbesondere immer dann vorteilhaft, wenn die Abwasserbehandlungsanordnung nachträglich an ein bestehendes Kanalnetz angeschlossen und dessen Verlauf nicht mehr geändert werden soll.

Wenn ein Abwasserzulauf, über welchen Abwasser der Abwasserbehandlungsanordnung zugeführt wird, in einen, beispielsweise zu Wartungszwecken, zugänglichen und vertikal verlaufenden Zulaufschacht mündet, so hat dies den Vorteil, dass in dem Zulaufschacht schon einmal eine grobe Sedimentation oder/und Leichtstoffabscheidung stattfinden kann. Auf diese Weise kann verhindert werden, dass relativ grobe Partikel oder/und Tröpfchen in ein Abwasserbehandlungsrohr gelangt, wodurch sich die Sammelräume weniger schnell füllen und die Zeitintervalle für die Entleerung der Sammelräume entsprechend verlängert werden können. Ferner kann durch den Zulaufschacht eine gute Zugänglichkeit zu der Einlassöffnung des strömungstechnisch am weitesten stromaufwärts angeordneten Abwasserbehandlungsrohres gewährleistet werden, durch welche Einlassöffnung das Abwasser von dem Zulaufschacht in den Strömungsraum dieses Abwasserbehandlungsrohres eindringt.

Ebenso kann eine gute Zugänglichkeit zu der Auslassöffnung des strömungstechnisch am weitesten stromabwärts angeordneten Abwasserbehandlungsrohres gewährleistet werden, durch welche Auslassöffnung das Abwasser den Strömungsraum dieses Abwasserbehandlungsrohres verlässt, wenn ein Abwasserablauf, über welchen Abwasser von der Abwasserbehandlungsanordnung abgeführt wird, von einem, beispielsweise zu Wartungszwecken, zugänglichen und vertikal verlaufenden Ablaufschacht ausgeht.

Besonders wartungsfreundlich, insbesondere im Hinblick auf die regelmäßige Entleerung der Abwasserbehandlungsanordnung von anfallenden Sedimentstoffen, kann die Abwasserbehandlungsanordnung ausgebildet sein, wenn die Sediment-Sammelräume, sofern vorhanden, der wenigstens zwei Abwasserbehandlungsrohre strömungstechnisch mittels wenigstens eines Sediment-Leitelements miteinander verbunden sind, und zwar derart, dass die in den jeweiligen Sediment-Sammelräumen anfallenden Sedimentstoffe bis zu einem gemeinsamen Sediment-Austragungsort der Schwerkraft folgend hinabrutschen können.

Analog gilt, insbesondere im Hinblick auf die regelmäßige Entleerung der Abwasserbehandlungsanordnung von anfallenden Leichtstoffen, dass die Abwasserbehandlungsanordnung besonders wartungsfreundlich ausgebildet sein kann, wenn die Leichtstoff-Sammelräume, sofern vorhanden, der wenigstens zwei Abwasserbehandlungsrohre strömungstechnisch mittels wenigstens eines Leichtstoff-Leitelements miteinander verbunden sind, und zwar derart, dass die in den jeweiligen Leichtstoff-Sammelräumen anfallenden Leichtstoffe bis zu einem gemeinsamen Leichtstoff-Austragungsort entgegen der Schwerkraft aufsteigen können.

Der gemeinsame Sediment-Austragungsort oder/und der gemeinsame Leichtstoff-Austragungsort befindet/befinden sich dabei vorzugsweise in der Nähe der oben genannten Einlassöffnung des strömungstechnisch am weitesten stromaufwärts angeordneten Abwasserbehandlungsrohres oder/und in der Nähe der oben genannten Auslassöffnung des strömungstechnisch am weitesten stromabwärts angeordneten Abwasserbehandlungsrohres. Aus diesem Grund ist eine gute Zugänglichkeit zu dieser Einlassöffnung oder/und dieser Auslassöffnung ebenfalls besonders vorteilhaft, um auf einfache Weise die gesamte Menge an Sedimentstoffen oder/und Leichtstoffen aus der Abwasserbehandlungsanordnung entfernen zu können.

Erfindungswesentlich ist, dass der Zulaufschacht mit dem Ablaufschacht identisch ist. Da dann anstelle von zwei separaten Schächten nur ein Schacht ausgehoben zu werden braucht, reduziert sich der Aufwand entsprechend. Um zu verhindern, dass sich das noch nicht behandelte, gerade erst eingeleitete Abwasser mit dem bereits behandelten Abwasser wieder vermugt weist dieser Schacht eine kreissegmentförmig ausgebildete Trennwand auf.

Damit die Fremdstoffe, wie oben beschrieben, alle zu einem gemeinsamen Sediment-Austragungsort hinabrutschen oder/und zu dem gemeinsamen Leichtstoff-Austragungsort aufsteigen können, wird vorgeschlagen, dass entweder alle Abwasserbehandlungsrohre der Abwasserbehandlungsanordnung in Strömungsrichtung ein ausschließlich positives Gefälle aufweisen, oder dass alle Abwasserbehandlungsrohre der Abwasserbehandlungsanordnung in Strömungsrichtung ein ausschließlich negatives Gefälle aufweisen. Somit können Sedimentstoffe, die in den Sediment-Sammelraum eines der Abwasserbehandlungsrohre eintreten, auf einfache Weise in dem Sediment-Sammelraum hinabrutschen. Wenn sie dann das am tiefsten gelegene Ende dieses Sediment-Sammelraums erreicht haben, können sie mittels eines Sediment-Leitelements in den Sediment-Sammelraum eines benachbarten, etwas tiefer gelegenen Abwasserbehandlungsrohrs gelangen. Dieser Vorgang kann sich solange wiederholen, bis die Sedimentstoffe den gemeinsamen Austragungsort erreicht haben. Analog können Leichtstoffe, die in den Leichtstoff-Sammelraum eines der Abwasserbehandlungsrohre eintritt, auf einfache Weise in dem Leichtstoff-Sammelraum aufsteigen. Wenn sie dann das am höchsten gelegene Ende dieses Leichtstoff-Sammelraums erreicht hat, kann sie mittels eines Leichtstoff-Leitelements in den Leichtstoff-Sammelraum eines benachbarten, etwas höher gelegenen Abwasserbehandlungsrohrs gelangen. Dieser Vorgang kann sich solange wiederholen, bis die Leichtstoffe den gemeinsamen Austragungsort erreicht haben.

Fertigungstechnisch ist es bevorzugt, wenn sich die einzelnen Abwasserbehandlungsrohre jeweils geradlinig erstrecken. Dies erlaubt es beispielsweise, die Rohre relativ einfach aus Kunststoff im Extrusionsverfahren zu fertigen. Selbstverständlich können die Abwasserbehandlungsrohre aber auch aus anderen Materialien, wie beispielsweise Beton oder dergleichen gefertigt sein. Wenn ein geradlinig ausgebildetes Abwasserbehandlungsrohr ein Gefälle aufweist, so ist in dieser Anmeldung darunter zu verstehen, dass sich der wenigstens eine Strömungsraum des Abwasserbehandlungsrohrs in Strömungsrichtung des Abwassers entlang einer Längsgeraden erstreckt, welche zu einer horizontalen Ebene einen Winkel einschließt.

Die Erfindung wird im Folgenden an einem Ausführungsbeispiel anhand der beigefügten Zeichnungen näher erläutert werden. Es stellt dar:
- Fig.1:: eine schematische, geschnittene Seitenansicht einer ersten Ausführungsform einer erfindungsgemäßen Abwasserbehandlungs-anordnung;
- Fig. 2:: eine vergrößerte schematische Schnittansicht der erfindungsgemäßen Abwasserbehandlungsanordnung gemäß der in Fig. 1 gezeigten Schnittlinie II-II;
- Fig. 3:: eine weitere schematische Schnittansicht der erfindungsgemäßen Abwasserbehandlungsanordnung gemäß der in Fig. 1 gezeigten Schnittlinie III-III;
- Fig.4:: eine schematische, geschnittene Seitenansicht einer zweiten Ausführungsform einer erfindungsgemäßen Abwasserbehandlungs-anordnung;
- Fig. 5:: eine grob schematische Draufsicht einer dritten Ausführungsform einer erfindungsgemäßen Abwasserbehandlungsanordnung.

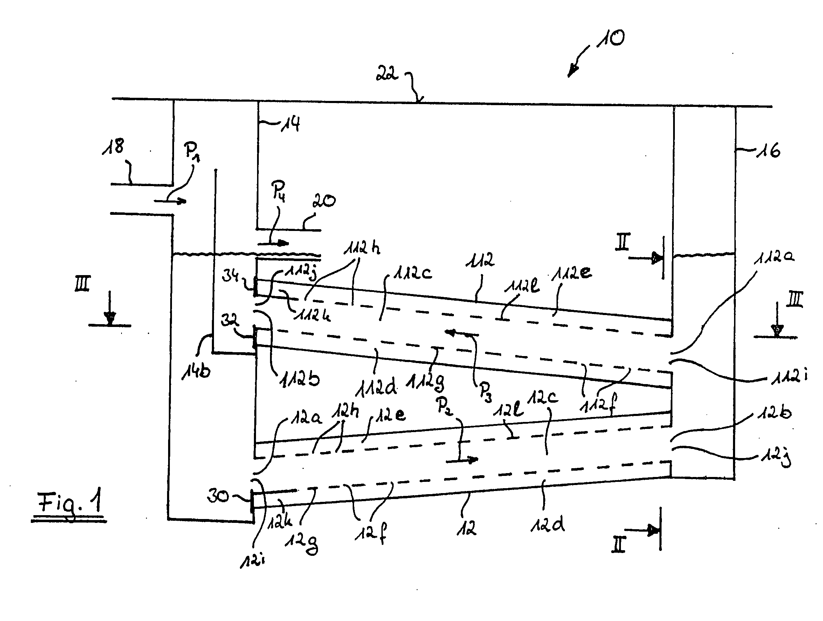

In Fig. 1 ist eine erste Ausführungsform einer erfindungsgemäßen Abwasserbehandlungsanordnung ganz allgemein mit 10 bezeichnet. Die Abwasserbehandlungsanordnung 10 dient der Bewirtschaftung von Regenwasser. Sie umfasst ein erstes Abwasserbehandlungsrohr 12 und ein dazu identisch ausgebildetes zweites Abwasserbehandlungsrohr 112, sowie einen sich vertikal erstreckenden ersten Wartungsschacht 14 und einen sich ebenfalls vertikal erstreckenden zweiten Wartungsschacht 16. Der erste Wartungsschacht 14 weist einen Zulauf 18 und einen Ablauf 20 auf, so dass der erste Wartungsschacht 14 zugleich Zulauf- und Ablaufschacht ist.

Durch den Zulauf 18 wird Regenwasser, das auf einer versiegelten Oberfläche 22, beispielsweise einer Straße, einem Parkplatz oder dergleichen, niedergegangen ist, in den ersten Wartungsschacht 14 eingeleitet (Pfeil P₁). Vor der Einleitung in den ersten Wartungsschacht 14 kann das Wasser bereits einen (nicht dargestellten) Siebeimer oder eine ähnliche Filtrationsvorrichtung durchströmt haben, in welcher sehr grobe Fremdstoffe, beispielsweise Blätter, aus dem Abwasser entfernt worden sind.

Nach dem Durchströmen der Abwasserbehandlungsanordnung 10 verlässt das Abwasser die Abwasserbehandlungsanordnung durch den Ablauf 20 (Pfeil P₄). Damit sich das noch nicht behandelte, gerade erste eingeleitete Abwasser nicht mit dem bereits in der Abwasserbehandlungsanordnung behandelten Abwasser im ersten Wartungsschacht 14 wieder vermengt, bzw. damit die Abwasserbehandlungsanordnung 10 nicht "kurzgeschlossen" wird, umfasst der Wartungsschacht 14 eine in diesem Ausführungsbeispiel kreissegmentförmig ausgebildete Trennwand 14b.

Wie in Fig. 1 dargestellt ist, ist das erste Abwasserbehandlungsrohr 12 von seinem in Fig. 1 linken, mit dem ersten Wartungsschacht 14 in Verbindung stehenden Ende 12a zu seinem in Fig. 1 rechten, mit dem zweiten Wartungsschacht 16 in Verbindung stehenden Ende 12b hin ansteigend, d.h. in Strömungsrichtung P₂ des Abwassers mit Gegengefälle, angeordnet. Ferner ist, wie in Fig. 1 dargestellt ist, das zweite Abwasserbehandlungsrohr 112 von seinem in Fig. 1 rechten, mit dem zweiten Wartungsschacht 16 in Verbindung stehenden Ende 112a zu seinem in Fig. 1 linken, mit dem ersten Wartungsschacht 14 in Verbindung stehenden Ende 112b hin ansteigend, d.h. in Strömungsrichtung P₃ des Abwassers mit Gegengefälle, angeordnet. Das Gegengefälle in den Abwasserbehandlungsrohren 12, 112 unterstützt in Verbindung mit der vorstehend angesprochenen turbulenzarmen Strömung insbesondere das Absinken von in dem Abwasser mitgeführten Fremdstoffen, die eine gegenüber Wasser höhere spezifische Dichte aufweisen, d.h. von so genannten Sedimentstoffen, wie beispielsweise Sand oder dergleichen sedimentierbare Stoffe.

Jedoch wirkt sich das Gegengefälle auch begünstigend auf das Aufsteigen von in dem Abwasser mitgeführten Fremdstoffen aus, die eine gegenüber Wasser geringere spezifische Dichte aufweisen, d.h. von Leichtstoffen. Dies ist darauf zurückzuführen, dass wegen des Gegengefälles das strömende Abwasser eine vertikal nach oben gerichtete Bewegungskomponente aufweist, so dass die Gefahr, Turbulenzen zu erzeugen, reduziert wird. Im Vergleich zu Sedimentstoffen reagieren Leichtstoffe, insbesondere Leichtflüssigkeit, zumeist empfindlicher auf Turbulenzen, wobei dieser Effekt auch von der Partikelgröße abhängt.

Um die in dem Abwasser mitgeführten Fremdstoffe, die eine gegenüber Wasser unterschiedliche spezifische Dichte aufweisen, von dem Abwasser trennen zu können, können die beiden Abwasserbehandlungsrohre 12 und 112 jeweils in drei Räume unterteilt sein, nämlich in einen Strömungsraum 12c, 112c, in einen Sediment-Sammelraum 12d, 112d und in einen Leichtstoff-Sammelraum 12e, 112e. Der Sediment-Sammelraum 12d, 112d ist dabei vorzugsweise mittels einer Mehrzahl von Boden-Durchtrittsöffnungen 12f, 112f, die im Bereich der Sohle bzw. des Bodens 12g, 112g des Strömungsraums 12c, 112c angeordnet sind, mit dem Strömungsraum 12c, 112c verbunden. Auf ähnliche Weise kann auch der Leichtstoff-Sammeiraum 12e, 112e mittels einer Mehrzahl von Decken-Durchtrittsöffnungen 12h, 112h, die im Bereich der Decke 121, 1121 angeordnet sind, mit dem Strömungsraum 12c, 112c verbunden sein.

Die Strömungsräume 12c, 112c sind im Bereich der beiden Längsenden 12a, 12b, 112a, 112b des jeweiligen Abwasserbehandlungsrohrs 12, 112 über Durchtrittsöffnungen 12i, 12j, 112i, 112j mit dem ersten Wartungsschacht 14 und dem zweiten Wartungsschacht 16 verbunden. Im Gegensatz hierzu besteht jedoch im normalen Abwasserbehandlungsbetrieb keine direkte Verbindung zwischen den jeweiligen Sammelräumen 12d, 112d, 12e, 112e auf der einen Seite und den Wartungsschächten 14, 16 auf der anderen Seite. Auf diese Weise sind die Sammelräume 12d, 112d, 12e, 112e strömungsberuhigt, damit sich dort Fremdstoffe ansammeln können.

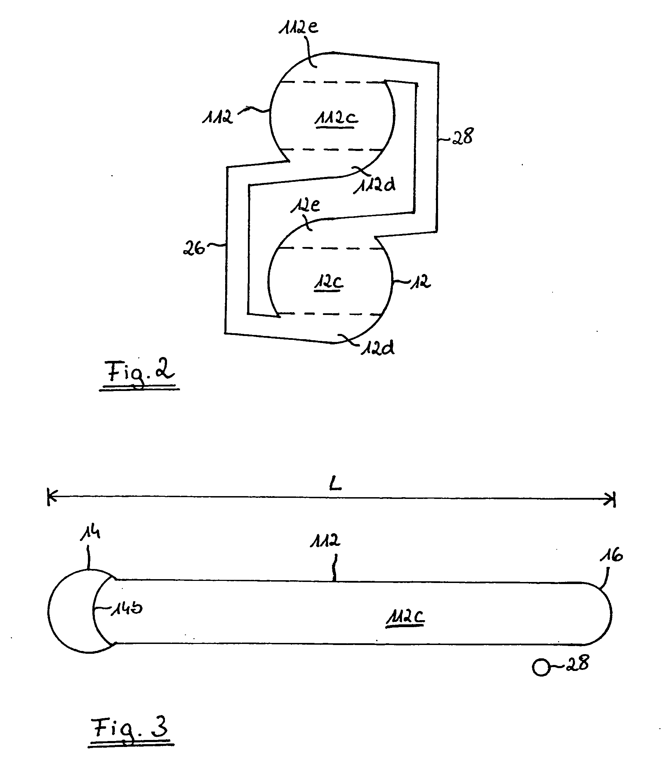

Fig. 2 ist eine Schnittansicht entlang der Schnittlinie II-II in Fig. 1, d.h. eine Schnittansicht parallel zum zweiten Wartungsschacht 16 und in dessen unmittelbarer Nähe. Wie in dieser Figur zu erkennen ist, kann sich ein grob schematisch angedeutetes Sediment-Leitelement 26 von einem am tiefsten gelegenen Bereich des Sediment-Sammelraums 112d des höher gelegenen Abwasserbehandlungsrohrs 112 der beiden Abwasserbehandlungsrohre 12, 112 zu einem am höchsten gelegenen Bereich des Sediment-Sammelraums 12d des tiefer gelegenen Abwasserbehandlungsrohrs 12 der beiden Abwasserbehandlungsrohre 12, 112 erstrecken. Somit stehen die beiden Sediment-Sammelräume 12d, 112d der Abwasserbehandlungsanordnung 10 mittels des Sediment-Leitelements 26 miteinander in Verbindung.

Sinken nun im normalen Abwasserbehandlungsbetrieb Sedimentstoffe im Strömungsraum 112c des höher gelegenen Abwasserbehandlungsrohrs 112 nach unten, treten diese durch die Boden-Durchtrittsöffnungen 112f und gelangen so in den strömungsberuhigten Sediment-Sammelraum 112d. Da das Abwasserbehandlungsrohr 112 ein Gefälle aufweist, können die Sedimentstoffe am Boden des Sediment-Sammelraums 112d der Schwerkraft folgend nach unten rutschen, bis sie den am tiefsten gelegenen Bereich des Sediment-Sammelraums 112d erreicht haben (am rechten Rand des Abwasserbehandlungsrohrs 112 in Fig. 1). Von dort rutschen die Sedimentstoffe dann durch das oben beschriebene Sediment-Leitelement 26 weiter der Schwerkraft folgend nach unten, nämlich zu dem am höchsten gelegenen Bereich des Sediment-Sammelraums 12d des tiefer gelegenen Abwasserbehandlungsrohrs 12. In diesem Sediment-Sammelraum 12d können die Sedimentstoffe, zusammen mit Sedimentstoffen, die im Strömungsraum 12c des tiefer gelegenen Abwasserbehandlungsrohrs 12 nach unten gesunken und durch die Durchtrittsöffnungen 12f hindurch getreten sind, bis zu einem am tiefsten gelegenen Bereich des Sediment-Sammelraums 12d rutschen.

Dieser am tiefsten gelegene Bereich (am linken Rand des Abwasserbehandlungsrohrs 12 in Fig. 1) ist ein Sediment-Austragungsort 12k, von wo die Sedimentstoffe im Wartungs- bzw. Reinigungsbetrieb ausgetragen werden können. Hierzu kann eine erste Wartungsklappe 30 geöffnet werden, so dass der Sediment-Sammelraum 12d des tiefer gelegenen Abwasserbehandlungsrohrs 12 in dem Bereich des Sediment-Austragungsorts 12k unmittelbar mit dem ersten Wartungsschacht 14 in Verbindung steht. Eine (nicht dargestellte) zu Wartungs- bzw. Reinigungszwecken in den ersten Wartungsschacht 14 eingebrachte, oder alternativ auch permanent im ersten Wartungsschacht 14 installierte, Absaugvorrichtung, kann die Sedimentstoffe dann absaugen, um sie aus der Abwasserbehandlungsanordnung 10 auszutragen.

Denkbar wäre es auch, am Boden des ersten Wartungsschachts 14 einen Korb vorzusehen, in den die Sedimentstoffe aus dem Sediment-Austragungsort 12k hineinrutschen können, wenn die Wartungsklappe 30 geöffnet wird. Der gefüllte Korb könnte dann, beispielsweise über ein Seil, durch den ersten Wartungsschacht 14 nach oben gezogen werden. Damit die Sedimentstoffe beim Austragen nicht wieder aufwirbeln, kann der Zulauf 18 dabei beispielsweise mittels einer (nicht dargestellten) Drosselvorrichtung geschlossen. Alternativ können die Sedimentstoffe bei Trockenwetter abgesaugt werden, etwa mit Hilfe hierfür geeigneten eines Saug-/Spülfahrzeugs.

Grundsätzlich besteht die Möglichkeit, dass nicht alle Sedimentstoffe, die in die Sediment-Sammelräume 12d, 112d gelangt sind, alleine durch die Schwerkraft bis zu dem Sediment-Austragungsort 12k hinabrutschen, sondern dass zumindest ein Teil der Sedimentstoffe an den Wandungen der Sediment-Sammelräume 12d, 112d haften bleibt. Daher ist es sinnvoll, die Abwasserbehandlungsanordnung 10 in entsprechenden Zeitintervalle einer gründlichen Reinigung zu unterziehen. Zu diesem Zweck weist der Sediment-Sammelraum 112d des höher gelegenen Abwasserbehandlungsrohrs 112 im Bereich seines oberen (in der Fig. 1 linken) Längsendes eine zweite Wartungsklappe 32 auf. Wenn die erste Wartungsklappe 30 im Wartungs- bzw. Reinigungsbetrieb geöffnet wird und die Sedimentstoffe mittels der Absaugvorrichtung abgesogen werden, kann auch die zweite Wartungsklappe 32 geöffnet werden und das in den Sediment-Sammelräumen 12d, 112d verbliebene Sediment mittels eines üblichen Reinigungsgerätes, beispielsweise einer Hochdruck-Reinigungslanze, herausgespült werden. Das Reinigungsgerät kann dabei von der Oberfläche 22 her über den ersten Wartungsschacht 14 zu der zweiten Wartungsklappe 32 geführt werden.

Wie in Fig. 2 zu erkennen ist, kann sich ferner ein grob schematisch angedeutetes Leichtstoff-Leitelement 28 von einem am höchsten gelegenen Bereich des Leichtstoff-Sammelraums 12e des tiefer gelegenen Abwasserbehandlungsrohrs 12 der beiden Abwasserbehandlungsrohre 12, 112 zu einem am tiefsten gelegenen Bereich des Leichtstoff-Sammelraums 12e des höher gelegenen Abwasserbehandlungsrohrs 112 der beiden Abwasserbehandlungsrohre 12, 112 erstrecken. Somit stehen die beiden Leichtstoff-Sammelräume 12e, 112e der Abwasserbehandlungsanordnung 10 mittels des Leichtstoff-Leitelements 28 miteinander in Verbindung.

Steigen nun im normalen Abwasserbehandlungsbetrieb Leichtstoffe im Strömungsraum 12c des tiefer gelegenen Abwasserbehandlungsrohrs 12 nach oben, treten diese durch die Decken-Durchtrittsöffnungen 12h und gelangen so in den strömungsberuhigten Leichtstoff-Sammelraum 12e. Da das Abwasserbehandlungsrohr 12 ein Gefälle aufweist, können die Leichtstoffe an der Decke des Leichtstoff-Sammelraums 12e entgegen der Schwerkraft nach oben aufsteigen, bis sie den am höchsten gelegenen Bereich des Leichtstoff-Sammelraums 12e erreichen (am rechten Rand des Abwasserbehandlungsrohrs 12 in Fig. 1). Von dort steigen die Leichtstoffe dann durch das oben beschriebene Leichtstoff-Leitelement 28 weiter entgegen der Schwerkraft nach oben, nämlich zu dem am tiefsten gelegenen Bereich des Leichtstoff-Sammelraums 112e des höher gelegenen Abwasserbehandlungsrohrs 112. In diesem Leichtstoff-Sammelraum 112e können die Leichtstoffe, zusammen mit Leichtstoffen, die im Strömungsraum 112c des höher gelegenen Abwasserbehandlungsrohrs 112 nach oben aufgestiegen und durch die Durchtrittsöffnungen 112f hindurch getreten sind, bis zu einem am höchsten gelegenen Bereich des Leichtstoff-Sammelraums 112e aufsteigen.

Dieser am höchsten gelegene Bereich (am linken Rand des Abwasserbehandlungsrohrs 112 in Fig. 1) ist ein Leichtstoff-Austragungsort 112k, von wo die Leichtstoffe im Wartungs- bzw. Reinigungsbetrieb ausgetragen werden können. Hierzu kann eine dritte Wartungsklappe 34 geöffnet werden, so dass der Leichtstoff-Sammelraum 112e des höher gelegenen Abwasserbehandlungsrohrs 112 in dem Bereich des Leichtstoff-Austragungsorts 112k unmittelbar mit dem ersten Wartungsschacht 14 in Verbindung steht. Eine (nicht dargestellte) zu Wartungs- bzw. Reinigungszwecken in den ersten Wartungsschacht 14 eingebrachte, oder alternativ auch permanent im ersten Wartungsschacht 14 installierte, weitere Absaugvorrichtung, kann die Leichtstoffe dann absaugen, um sie aus der Abwasserbehandlungsanordnung 10 auszutragen.

Fig. 3 stellt eine schematische Schnittansicht der Abwasserbehandlungsanordnung 10 gemäß der in Fig. 1 gezeigten Schnittlinie III-III dar. Wie in dieser Figur gut zu erkennen ist, braucht für die Verlegung des dargestellten Ausführungsbeispiels einer erfindungsgemäßen Abwasserbehandlungsanordnung 10 nur ein sehr schmaler und zudem relativ kurzer Graben (mit der Länge L) ausgehoben zu werden. Trotz dieser kurzen Länge weisen die beiden Abwasserbehandlungsrohre 12, 112, die von dem Abwasser durchströmt werden, zusammen eine Länge in Strömungsrichtung von annähernd der doppelten Länge L des Grabens auf. Somit kann die für die Verlegung der gezeigten Abwasserbehandlungsanordnung 10 benötigte Arbeit beim Graben gegenüber der benötigten Arbeit beim Verlegen einer herkömmlichen Abwasserbehandlungsanordnung mit einem einzigen gestreckten Abwasserbehandlungsrohr deutlich reduziert werden.

Natürlich könnte bzw. könnten bei der in dem ersten Ausführungsbeispiel dargestellten Abwasserbehandlungsanordnung 10 das Sediment-Leitelement 26 oder/und das Leichtstoff-Leitelement 28 auch weggelassen werden und die beiden Abwasserbehandlungsrohre 12, 112 an ihrem dem zweiten Wartungsschacht 16 zugewandten (in Fig. 1 rechten) Ende mit weiteren Wartungsklappen versehen werden. Somit müssten dann jedoch auch durch den zweiten Wartungsschacht 16 entsprechende Reinigungsgeräte oder/und Absaugvorrichtungen im Wartungs- bzw. Reinigungsbetrieb eingebracht werden. Das oben beschriebene Ausführungsbeispiel hat dagegen den Vorteil, dass solche Reinigungsgeräte und Absaugvorrichtungen nur in den ersten Wartungsschacht 14 eingeführt zu werden brauchen, wodurch der zweite Wartungsschacht 16 entsprechend kleiner ausgestaltet sein kann, bzw. alternativ auch gar nicht als Schacht ausgestaltet sein muss.

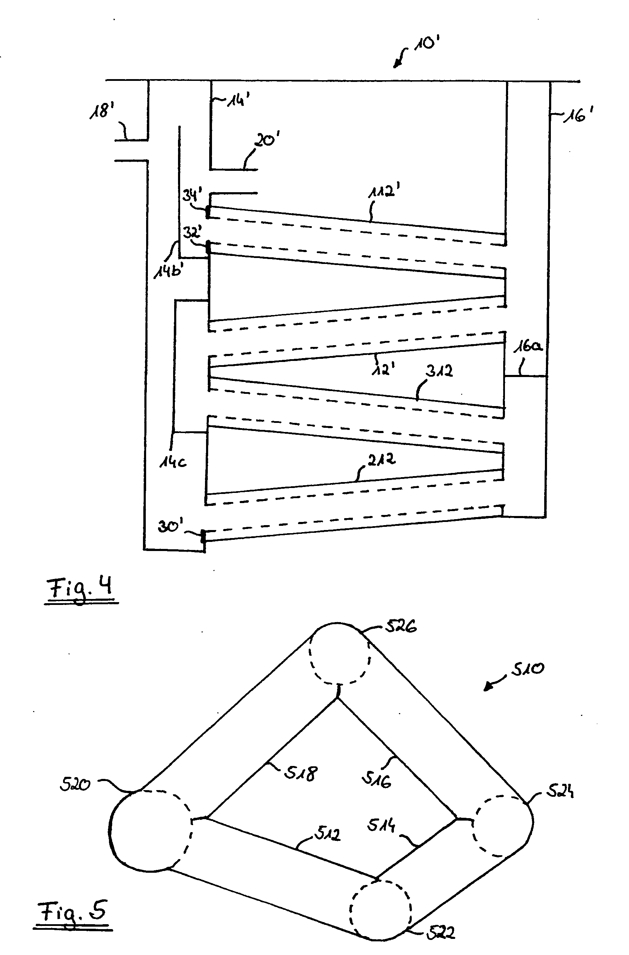

Die in den Fig. 1 bis 3 gezeigte Abwasserbehandlungsanordnung 10 kann ferner dahingehend modifiziert werden, dass weitere Abwasserbehandlungsrohre hinzugefügt werden, um das Verhältnis von Gesamtlänge der Abwasserbehandlungsrohre zu der Länge L des für die Verlegung der Anordnung auszuhebenden Grabens weiter zu verbessern, wobei jedoch der Graben entsprechend tiefer auszuheben ist. Vorzugsweise bleibt die Gesamtanzahl an Abwasserbehandlungsrohren in einer solchen Anordnung geradzahlig, so dass der erste Wartungsschacht zugleich Zulauf- und Ablaufschacht ist. Bei einer größeren Anzahl an Abwasserbehandlungsrohren sind entsprechende (zusätzliche) Trennwände in dem ersten Wartungsschacht 14 und dem zweiten Wartungsschacht 16 vorzusehen, damit keine erneute Durchmischung von bereits behandeltem Abwasser mit noch unbehandeltem Abwasser stattfindet, bzw. damit die Anordnung nicht einfach "kurzgeschlossen" wird. Ein entsprechendes Ausführungsbeispiel mit mehr als zwei Abwasserbehandlungsrohren wird nachfolgend bezüglich Fig. 4 beschrieben.

In Fig. 4 ist eine schematische, geschnittene Seitenansicht einer zweiten Ausführungsform einer erfindungsgemäßen Abwasserbehandlungsanordnung dargestellt. Die Ausführungsform gemäß Fig. 4 unterscheidet sich nur hinsichtlich bestimmter Details von der Ausführungsform gemäß Fig. 1. Daher sind in Fig. 4 analoge Teile mit den gleichen Bezugszeichen versehen wie in Fig. 1, jedoch sind sie zusätzlich mit einem Strich versehen. Ferner wird die Ausführungsform gemäß Fig. 4 im Folgenden nur insoweit beschrieben, als sie sich von der Ausführungsform gemäß Fig. 1 unterscheidet, auf deren Beschreibung hiermit ansonsten ausdrücklich verwiesen sei.

Die Abwasserbehandlungsanordnung 10' der zweiten Ausführungsform umfasst genauso wie die Abwasserbehandlungsanordnung 10 der ersten Ausführungsform einen sich vertikal erstreckenden ersten Wartungsschacht 14' und einen sich ebenfalls vertikal erstreckenden zweiten Wartungsschacht 16', wobei aber die beiden Wartungsschächte 14' und 16' länger ausgebildet sind als in der ersten Ausführungsform. Ferner unterscheidet sich die zweite Ausführungsform von der ersten Ausführungsform insbesondere darin, dass die Abwasserbehandlungsanordnung nicht zwei, sondern vier Abwasserbehandlungsrohre 12', 112', 212 und 312 aufweist, welche alle identisch zueinander ausgebildet sind, wobei auf die detaillierte Beschreibung der Abwasserbehandlungsrohre 12 und 112 in Fig. 1 verwiesen sei.

Das Regenwasser wird durch einen Zulauf 18' in den ersten Wartungsschacht 14' eingeleitet, um dann nacheinander in dieser Reihenfolge die Abwasserbehandlungsrohre 212, 312, 12' und 112' zu durchströmen, ehe es die Abwasserbehandlungsanordnung 10' durch einen Ablauf 20' wieder verlässt.

Damit das zu behandelnde Regenwasser auch auf dem soeben beschriebenen Strömungsweg strömt und die Abwasserbehandlungsanordnung 10' nicht "kurzgeschlossen" wird, umfasst der erste Wartungsschacht 14' neben einer ersten Trennwand 14b', die identisch zu der Trennwand 14b der ersten Ausführungsform ausgebildet sein kann, ferner noch eine zweite Trennwand 14c. Die zweite Trennwand 14c unterscheidet sich von der ersten Trennwand 14b' nur dadurch, dass sie auch an ihrem oberen Ende geschlossen ist. Weiterhin umfasst der zweite Wartungsschacht 16' eine Trennwand 16a, welche den Wartungsschacht 16' in einen oberen und einen davon getrennten unteren Bereich unterteilt, um so den oben beschriebenen Strömungsweg für das Abwasser zu definieren.

Zur Verbindung der jeweiligen Sediment-Sammelräume und Leichtstoff-Sammelräume der Abwasserbehandlungsrohre 212, 312, 12' und 112' miteinander können auch in dieser Ausführungsform die in Fig. 2 beschriebenen Sediment-Leitelemente bzw. Leichtstoff-Leitelemente an den jeweiligen Endbereichen der Rohre eingesetzt werden. Somit können die in Fig. 4 gezeigten Wartungsklappen 30', 32' und 34' die gleiche Funktion bezüglich der Anlagenwartung erfüllen, wie die entsprechenden Wartungsklappen 30, 32, 34 bei dem ersten Ausführungsbeispiel.

Weiterhin ist natürlich auch eine Modifikation der vorliegenden Abwasserbehandlungsanordnung dahingehend denkbar, dass die Abwasserbehandlungsrohre nicht alle in der gleichen, sich vertikal erstreckenden Ebene verlegt werden, sondern dass sie beispielsweise in Form eines nicht planaren Polygonzuges angeordnet werden. Hierdurch wird zwar nötig, größere Bereiche der Oberfläche aufzugraben und entsprechend mehr Wartungsschächte bereitzustellen, doch kann dies, je nach den örtlichen Beschaffenheit, durchaus akzeptabel sein. Gegenüber einer herkömmlichen Abwasserbehandlungsanordnung mit nur einem geradlinig gestreckten Abwasserbehandlungsrohr weist die erfindungsgemäße Abwasserbehandlungsanordnung einen wesentlich höheren Grad an Flexibilität auf, was ihre Form betrifft.

Fig. 5 zeigt eine grob schematische Draufsicht einer dritten Ausführungsform einer erfindungsgemäßen Abwasserbehandlungsanordnung 510, bei welcher vier Abwasserbehandlungsrohre 512, 514, 516 und 518, wie soeben beschrieben, in Form eines nicht planaren Polygonzuges angeordnet sind. Die Eckpunkte des Polygonzuges werden durch (teilweise gestrichelt dargestellte) Wartungsschächte 520, 522, 524 und 526 gebildet, welche die vier Abwasserbehandlungsrohre 512, 514, 516 und 518 miteinander verbinden. Der Wartungsschacht 520 ist dabei etwas größer als die übrigen Wartungsschächte 522, 524 und 526 ausgebildet und umfasst einen (nicht dargestellten) Zu- und Ablauf.

Zur Verdeutlichung der Flexibilität bezüglich der Form der erfindungsgemäßen Abwasserbehandlungsanordnung 510, weisen die vier Abwasserbehandlungsrohre 512, 514, 516 und 518 in diesem Ausführungsbeispiel alle unterschiedliche Längen auf, welche hier relativ kurz sind. Es versteht sich aber, dass unterschiedliche Längen auf keinen Fall zwingend erforderlich sind, und häufig gleiche Längen aus fertigungstechnischen Gründen sogar bevorzugt sein mögen.

Zusammenfassend betrifft die Erfindung eine Abwasserbehandlungsanordnung zum zumindest teilweisen Entfernen von Fremdstoffen, die eine gegenüber Wasser abweichende spezifische Dichte aufweisen, aus Abwasser, umfassend wenigstens ein Abwasserbehandlungsrohr welches wenigstens einen Strömungsraum und wenigstens einen strömungsberuhigten Sammelraum aufweist, welcher über wenigstens eine vorgesehene Durchtrittsöffnung mit dem wenigstens einen Strömungsraum verbunden ist, und in welchem sich die Fremdstoffe ansammeln; wobei die Abwasserbehandlungsanordnung wenigstens zwei derartige Abwasserbehandlungsrohre umfasst, welche strömungstechnisch mittels wenigstens eines von ihnen gesondert ausgebildeten Verbindungselements miteinander verbunden sind.

## Patentansprüche

1. Abwasserbehandlungsanordnung (10; 10'; 510) zum zumindest teilweisen Entfernen von Fremdstoffen, die eine gegenüber Wasser abweichende spezifische Dichte aufweisen, aus Abwasser, insbesondere aus Regenwasser, umfassend wenigstens ein Abwasserbehandlungsrohr (12, 112; 212, 312, 12', 112'; 512, 514, 516, 518), welches aufweist:
wenigstens einen Strömungsraum (12c, 112c) mit wenigstens einer Einlassöffnung (12i, 112i) und wenigstens einer Auslassöffnung (12j, 112j), wobei das Abwasser durch die wenigstens eine Einlassöffnung (12i, 112i) in den wenigstens einen Strömungsraum (12c, 112c) eintritt und nach Durchströmen des wenigstens einen Strömungsraums (12c, 112c) durch die wenigstens eine Auslassöffnung (12j, 112j) aus dem wenigstens einen Strömungsraum (12c, 112c) austritt; und
wenigstens einen strömungsberuhigten Sammelraum (12d, 12e, 112d, 112e), welcher über wenigstens eine am Boden (12g, 112g) oder/und an der Decke (121, 112I) des wenigstens einen Strömungsraums (12c, 112c) vorgesehene Durchtrittsöffnung (12f, 12h, 112f, 112h) mit dem wenigstens einen Strömungsraum (12c, 112c) verbunde ist, und in welchem sich die in dem wenigstens einem Strömungsraum (12c, 112c) auf Grund ihrer gegenüber Wasser abweichenden spezifischen Dichte zu Boden (12g, 112g) sinkenden oder/und zur Decke (121, 112I) steigenden und durch die wenigstens eine Durchtrittsöffnung (12f, 12h, 112f, 112h) hindurchtretenden Fremdstoffe ansammelt;
einen Abwasserzulauf (18; 18'), über welchen Abwasser der Abwasserbehandlungsanordnung (10; 10'; 510) zugeführt wird, der in einen zugänglichen und vertikal verlaufenden Zulaufschacht (14; 14'; 520) mündet, und
einen Abwasserablauf (20; 20'), über welchen Abwasser von der Abwasserbehandlungsanordnung (10; 10'; 510) abgeführt wird, der von einem zugänglichen und vertikal verlaufenden Ablaufschacht (14, 14', 520) ausgeht;
**dadurch gekennzeichnet, dass**
die Abwassserbehandlungsanordnung (10; 10'; 501) wenigstens zwei derartige Abwasserbehandlungsrohre (12, 112; 212, 312, 12', 112'; 512, 514, 516, 518) umfasst, welche strömungstechnisch mittels wenigstens eines von ihnen gesondert ausgebildeten Verbindungselements ( 16; 16'; 522, 524, 526) miteinander verbunden sind, und zwar derart, dass Abwasser, welches durch die wenigstens eine Auslassöffnung (12j) aus dem wenigstens einen Strömungsraum (12c) eines der Abwasserbehandlungsrohre (12) in das Verbindungselement (16; 16'; 522, 524, 526) austritt, aus diesem Verbindungselement (16; 16'; 522, 524, 526) durch die wenigstens eine Einlassöffnung (112i) in den wenigstens einen Strömungsraum (112c) des ihm stromabwärts benachbarten Abwasserbehandlungsrohres (112; 312, 12', 112'; 514, 516, 518) der wenigstens zwei Abwasserbehandlungsrohre (12, 112; 212, 312, 12', 112'; 512, 514, 516, 518) eintritt und
dass der Zulaufschacht (14; 14'; 520) mit dem
Ablaufschacht identisch ist, wobei dieser Schacht eine kreissegmentförmig ausgebildete Trennwand (14b; 14b'; 14c) umfasst, die dazu ausgebildet ist, zu verhindern, dass sich das noch nicht behandelte, gerade erst eingeleitete Abwasser mit dem bereits in der Abwasserbehandlungsanordung (10; 10'; 510) behandelte Abwasser wieder vermengt.

2. Abwasserbehandlungsanordnung nach Anspruch 1, **dadurch gekennzeichnet, dass** wenigstens ein Verbindungselement ( 16; 16'; 522, 524, 526) der Abwasserbehandlungsanordnung (10; 10'; 510) in einem, beispielsweise zu Wartungszwecken, zugänglichen und vertikal verlaufenden Schacht ( 16; 16'; 522, 524, 526) angeordnet oder von diesem selbst gebildet ist.

3. Abwasserbehandlungsanordnung (10; 10'; 510) nach Anspruch 2, **dadurch gekennzeichnet, dass** alle Verbindungselemente ( 16; 16'; 522, 524, 526) der Abwasserbehandlungsanordnung (10; 10'; 510) in zwei, beispielsweise zu Wartungszwecken, zugänglichen und vertikal verlaufenden Schächten ( 16; 16'; 522, 524, 526) angeordnet oder von diesen selbst gebildet sind.

4. Abwasserbehandlungsanordnung (10; 10'; 510) nach Anspruch 3, **dadurch gekennzeichnet, dass** die Abwasserbehandlungsanordnung (10; 10'; 510) eine gerade Anzahl an Abwasserbehandlungsrohren (12, 112; 212, 312, 12', 112'; 512, 514, 516, 518) umfasst.

5. Abwasserbehandlungsanordnung (10; 10'; 510) nach einem der vorhergehenden Ansprüche, **dadurch gekennzeichnet, dass** entweder alle Abwasserbehandlungsrohre (12, 112; 212, 312, 12', 112'; 512, 514, 516, 518) der Abwasserbehandlungsanordnung (10; 10'; 510) in Strömungsrichtung (P2, P3) ein ausschließlich positives Gefälle aufweisen, oder dass alle Abwasserbehandlungsrohre (12, 112; 212, 312, 12', 112'; 512, 514, 516, 518) der Abwasserbehandlungsanordnung (10; 10'; 510) in Strömungsrichtung (P2, P3) ein ausschließlich negatives Gefälle aufweisen.

## Claims

1. Waste water treatment assembly (10; 10'; 510) for removing foreign matter, which has a specific density different from that of water, from waste water at least in part, more particularly from rainwater, comprising at least one waste water treatment pipe (12, 112; 212, 312, 12', 112'; 512, 514, 516, 518), which comprises:
at least one flow chamber (12c, 112c) comprising at least one inlet opening (12i, 112i) and at least one outlet opening (12j, 112j), the waste water entering the at least one flow chamber (12c, 112c) through the at least one inlet opening (12i, 112i) and after flowing through the at least one flow chamber (12c, 112c), exits the at least one flow chamber (12c, 112c) through the at least one outlet opening (12j, 112j); and
at least one flow-calmed collection chamber (12d, 12e, 112d, 112e), which is connected to the at least one flow chamber (12c, 112c) via at least one through opening (12f, 12h, 112f, 112h) provided on the base (12g, 112g) or/and on the cover (12I, 112I) of the at least one flow chamber (12c, 112c), and in which collection chamber the foreign matter in the at least one flow chamber (12c, 112c), which foreign matter sinks towards the base (12g, 112g) or/and rises towards the cover (12I, 112I) owing to the specific density thereof which is different from that of water, and enters through the at least one through opening (12f, 12h, 112f, 112h), collects;
a waste water inlet (18, 18'), via which waste water is supplied to the waste water treatment assembly (10, 10'; 510) and which discharges into an accessible, vertically extending inlet shaft (14, 14'; 520); and
a waste water outlet (20; 20'), via which waste water is conducted away from the waste water treatment assembly (10; 10'; 510) and runs out of an accessible, vertically extending outlet shaft (14, 14'; 520);
**characterised in that** the waste water treatment assembly (10; 10'; 510) comprises at least two waste water treatment pipes (12, 112; 212, 312, 12', 112'; 512, 514, 516, 518) of the type which are interconnected in terms of flow by means of at least one connecting element (16; 16'; 522, 524, 526) which is formed separately therefrom, and **in that** waste water, which exits the at least one flow chamber (12c) of one of the waste water treatment pipes (12) through the at least one outlet opening (12j) into the connecting element (16; 16'; 522, 524, 526), enters the at least one flow chamber (112c) of the waste water treatment pipe (112; 312, 12', 112'; 514, 516, 518), which is adjacent thereto downstream, of the at least two waste water treatment pipes (12, 112; 212, 312, 12', 112'; 512, 514, 516, 518), from said connecting element (16; 16'; 522, 524, 526) and
**in that** the inlet shaft (14; 14'; 520) is identical to the outlet shaft, said shaft comprising a circle-segment-shaped dividing wall (14b; 14b'; 14c) which is formed to prevent the waste water which has not yet been treated and has only just been introduced from mixing again with the waste water which has already been treated in the waste water treatment assembly (10; 10'; 510).

2. Waste water treatment assembly according to claim 1, **characterised in that** at least one connecting element (16; 16', 522, 524, 526) of the waste water treatment assembly (10; 10'; 510) is arranged in an accessible, for example for maintenance purposes, vertically extending shaft (16; 16'; 522, 524, 526), or is formed thereby.

3. Waste water treatment assembly (10; 10'; 510) according to claim 2, **characterised in that** all the connecting elements (16; 16', 522, 524, 526) of the waste water treatment assembly (10; 10'; 510) are arranged in two accessible, for example for maintenance purposes, vertically extending shafts (16; 16'; 522, 524, 526), or are formed thereby.

4. Waste water treatment assembly (10; 10'; 510) according to claim 3, **characterised in that** the waste water treatment assembly (10; 10'; 510) comprises an even number of waste water treatment pipes (12, 112; 212, 312, 12', 112'; 512, 514, 516, 518).

5. Waste water treatment assembly (10; 10'; 510) according to any of the preceding claims, **characterised in that** either all the waste water treatment pipes (12, 112; 212, 312, 12', 112'; 512, 514, 516, 518) of the waste water treatment assembly (10; 10'; 510) have a solely positive gradient in the flow direction (P2, P3), or **in that** all the waste water treatment pipes (12, 112; 212, 312, 12', 112'; 512, 514, 516, 518) of the waste water treatment assembly (10; 10'; 510) have a solely negative gradient in the flow direction (P2, P3).

## Revendications

1. Agencement de traitement d'eaux usées (10; 10'; 510) pour l'élimination au moins partielle de substances étrangères, qui présentent une densité spécifique différente de celle de l'eau, hors des eaux usées, en particulier hors de l'eau de pluie, comprenant au moins un tube de traitement d'eaux usées (12, 112; 212, 312, 12', 112'; 512, 514, 516, 518), qui présente:
au moins une chambre d'écoulement (12c, 112c) avec au moins une ouverture d'entrée (12i, 112i) et au moins une ouverture de sortie (12j, 112j), dans lequel les eaux usées entrent dans la chambre d'écoulement (12c, 112c) par ladite au moins une ouverture d'entrée (12i, 112i) et, après la traversée de ladite au moins une chambre d'écoulement (12c, 112c), sortent de ladite au moins une chambre d'écoulement (12c, 112c) par ladite au moins une ouverture de sortie (12j, 112j); et
au moins une chambre de collecte à écoulement calme (12d, 12e, 112d, 112e), qui est raccordée à ladite au moins une chambre d'écoulement (12c, 112c) par au moins une ouverture de passage (12f, 12h, 112f, 112h) prévue dans le fond (12g, 112g) et/ou dans le plafond (121, 1121) de ladite au moins une chambre d'écoulement (12c, 112c), et dans laquelle s'accumulent les substances étrangères descendant vers le fond (12g, 112g) et/ou montant vers le plafond (121 1121) dans ladite au moins une chambre d'écoulement (12c, 112c) en raison de leur densité spécifique différente de celle de l'eau et passant à travers ladite au moins une ouverture de passage (12f, 12h, 112f, 112h);
une arrivée d'eaux usées (18; 18'), par laquelle des eaux usées sont fournies à l'agencement de traitement d'eaux usées (10; 10'; 510), qui débouche dans un puits d'arrivée (14; 14'; 520) accessible et s'étendant verticalement; et
une évacuation d'eaux usées (20; 20'), par laquelle les eaux usées sont évacuées de l'agencement de traitement d'eaux usées (10; 10'; 510), qui part d'un puits d'évacuation (14, 14'; 520) accessible et s'étendant verticalement,
**caractérisé en ce que**
l'agencement de traitement d'eaux usées (10; 10'; 510) comprend au moins deux tubes de traitement d'eaux usées de ce type (12, 112; 212, 312, 12', 112'; 512, 514, 516, 518), qui sont raccordés l'un à l'autre au niveau technique d'écoulement au moyen d'au moins un élément de raccordement (16; 16'; 522, 524, 526) formé séparément de ceux-ci, notamment de telle manière que les eaux usées, qui sortent par ladite au moins une ouverture de sortie (12j) hors de ladite au moins une chambre d'écoulement (12c) d'un des tubes de traitement d'eaux usées (12) vers l'élément de raccordement (16; 16'; 522, 524, 526), entrent, à partir de cet élément de raccordement (16; 16'; 522, 524, 526), par ladite au moins une ouverture d'entrée (112i), dans ladite au moins une chambre d'écoulement (112c) du tube de traitement d'eaux usées (112; 312, 12', 112'; 514, 516, 518), disposé en aval de celle-ci, des au moins deux tubes de traitement d'eaux usées (12, 112; 212, 312, 12', 112'; 512, 514, 516, 518), et
**en ce que** le puits d'arrivée (14; 14'; 520) est identique au puits d'évacuation, dans lequel ce puits comprend une paroi de séparation (14b; 14b', 14c), réalisée en forme de segment de cercle, qui est réalisée dans le but d'empêcher que les eaux non encore traitées qui viennent juste d'être introduites se mélangent de nouveau avec les eaux usées déjà traitées dans l'agencement de traitement d'eaux usées (10; 10'; 510).

2. Agencement de traitement d'eaux usées selon la revendication 1, **caractérisé en ce qu'**au moins un élément de raccordement (16; 16'; 522, 524, 526) de l'agencement de traitement d'eaux usées (10; 10'; 510) est disposé dans un puits accessible, par exemple dans un but d'entretien, et s'étendant verticalement (16; 16'; 522, 524, 526), ou est lui-même formé par celui-ci.

3. Agencement de traitement d'eaux usées (10; 10'; 510) selon la revendication 2, **caractérisé en ce que** tous les éléments de raccordement (16; 16'; 522, 524, 526) de l'agencement de traitement d'eaux usées (10; 10'; 510) sont disposés dans deux puits (16; 16'; 522, 524, 526) accessibles, par exemple dans un but d'entretien, et s'étendant verticalement, ou sont eux-mêmes formés par ceux-ci.

4. Agencement de traitement d'eaux usées (10; 10'; 510) selon la revendication 3, **caractérisé en ce que** l'agencement de traitement d'eaux usées (10; 10'; 510) comprend un nombre pair de tubes de traitement d'eaux usées (12, 112; 212, 312, 12', 112'; 512, 514, 516, 518).

5. Agencement de traitement d'eaux usées (10; 10'; 510) selon l'une quelconque des revendications précédentes, **caractérisé en ce que** soit tous les tubes de traitement d'eaux usées (12, 112; 212, 312, 12', 112'; 512, 514, 516, 518) de l'agencement de traitement d'eaux usées (10; 10'; 510) présentent une pente exclusivement positive dans la direction d'écoulement (P2, P3) soit tous les tubes de traitement d'eaux usées (12, 112; 212, 312, 12', 112'; 512, 514, 516, 518) de l'agencement de traitement d'eaux usées (10; 10'; 510) présentent une pente exclusivement négative dans la direction d'écoulement (P2, P3).
